(19) Europäisches Patentamt / European Patent Office / Office européen des brevets

(11) **EP 4 559 741 A1**

(12) **EUROPÄISCHE PATENTANMELDUNG**

(43) Veröffentlichungstag:
**28.05.2025 Patentblatt 2025/22**

(21) Anmeldenummer: **23212354.7**

(22) Anmeldetag: **27.11.2023**

(51) Internationale Patentklassifikation (IPC):
**B60N 2/02** *(2006.01)* **B60N 2/07** *(2006.01)*

(52) Gemeinsame Patentklassifikation (CPC):
**B60N 2/0722; B60N 2/0272;** B60N 2210/14

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Adient US LLC**
**Plymouth, MI 48170 (US)**

(72) Erfinder:
• **QUAST, Ingo**
**40477 Duesseldorf (DE)**

• **SPRENGER, Erik**
**42929 Wermelskirchen (DE)**
• **ZALAVARI, Kornel**
**42659 Solingen (DE)**
• **MAYER, Thomas**
**42477 Radevormwald (DE)**
• **HEEG, Norbert**
**66994 Dahn (DE)**

(74) Vertreter: **Liedtke & Partner Patentanwälte**
**Gerhart-Hauptmann-Straße 10/11**
**99096 Erfurt (DE)**

(54) **LÄNGSVERSTELLEINRICHTUNG FÜR EINEN SITZ**

(57) Die Erfindung betrifft eine Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie eine Anzahl von Rädern (118), die eingerichtet sind, auf einer den Rädern (118) zugewandten Kontaktfläche (120) der Unterschiene (116) abzurollen und die Oberschiene (114) relativ zu der Unterschiene (116) zu verstellen, wobei mindestens eines der Räder (118) als ein Kontaktrad (126) ausgebildet ist und dieses Kontaktrad (126) und/oder die Kontaktfläche (120) eingerichtet sind beziehungsweise ist, permanent miteinander in Kontakt zu stehen, und wobei dieses Kontaktrad (126) eine Positionserkennungseinrichtung (132) aufweist.

FIG 6

EP 4 559 741 A1

**Beschreibung**

Die Erfindung betrifft eine Längsverstelleinrichtung für einen Sitz, insbesondere einen Fahrzeugsitz, sowie einen Fahrzeugsitz mit einer solchen Längsverstelleinrichtung.

Stand der Technik

Eine Längsverstelleinrichtung umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein beispielsweise federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen als auch in die Durchbrüche bewegbar sind. Eine derartige Längsverstelleinrichtung ist beispielsweise aus dem Europäischen Patent EP 1 227 950 B1 bekannt.

Aufgabe

Der Erfindung liegt die Aufgabe zu Grunde, eine Längsverstelleinrichtung bereitzustellen, für welche eine Sitzposition genau bestimmbar ist, sowie einen entsprechenden Fahrzeugsitz bereitzustellen.

**Lösung**

Die erstgenannte Aufgabe wird erfindungsgemäß gelöst durch eine Längsverstelleinrichtung mit den Merkmalen des Anspruchs 1. Die zweitgenannte Aufgabe wird erfindungsgemäß gelöst durch einen Fahrzeugsitz mit den Merkmalen des Anspruchs 10.
Vorteilhafte Ausgestaltungen, welche einzeln oder in Kombination miteinander eingesetzt werden können, sind Gegenstand der Unteransprüche.
Die erfindungsgemäße Längsverstelleinrichtung für einen Sitz, insbesondere einen elektromotorisch verstellbaren Fahrzeugsitz, umfasst zumindest eine Schienenanordnung mit einer festen Unterschiene und einer zur Unterschiene verstellbaren Oberschiene sowie eine Anzahl von Rädern, die eingerichtet sind, auf einer den Rädern zugewandten Kontaktfläche der Unterschiene abzurollen und die Oberschiene relativ zu der Unterschiene zu verstellen, wobei mindestens eines der Räder als ein Kontaktrad ausgebildet ist und dieses Kontaktrad und/oder die Kontaktfläche eingerichtet sind beziehungsweise ist, permanent miteinander in Kontakt zu stehen, und wobei dieses Kontaktrad eine Positionserkennungseinrichtung aufweist.
Dadurch, dass die Positionserkennungseinrichtung direkt an dem Kontaktrad, das permanent mit der Kontaktfläche in Kontakt steht, angeordnet ist und/oder mit diesem Kontaktrad in Wechselwirkung steht, kann die momentane Position des Sitzes genau, insbesondere über den gesamten Verstellweg hinweg positionsgenau, bestimmt werden.
Die Längsverstelleinrichtung kann für eine elektromotorische Verstellung zumindest eine mit der Schienenanordnung koppelbare oder gekoppelte Antriebseinrichtung umfassen, die mit mindestens einem der Räder, das als Antriebsrad ausgebildet ist, gekoppelt oder koppelbar ist.
Für ein permanentes in Kontakt stehen miteinander können oder kann das Kontaktrad und/oder die Kontaktfläche beispielsweise mit einer Kontaktierungsschicht, insbesondere einer Gummierung, einer Kunststoffschicht oder dergleichen, versehen sein.
Alternativ oder zusätzlich kann mindestens ein Ausgleichsmechanismus vorgesehen sein, der beispielsweise eingerichtet ist, dass das Kontaktrad und die Kontaktfläche permanent in Kontakt stehen. Beispielsweise kann der Ausgleichsmechanismus als ein Federmechanismus, insbesondere Spannfedermechanismus, ausgebildet sein.
Beispielsweise kann die Positionserkennungseinrichtung als eine kontaktlose Sensoreinrichtung ausgebildet sein. Insbesondere kann die Positionserkennungseinrichtung einen Hallsensor umfassen.
Der Hallsensor kann beispielsweise ortsfest an der Oberschiene und/oder einer Sitzhalterung im Bereich des Kontaktrades angeordnet sein. Das Kontaktrad kann beispielsweise mit einem interagierenden Element versehen sein.
In einem ersten Ausführungsbeispiel kann das interagierende Element als ein Zahnrad mit einer Anzahl von Zähnen ausgebildet sein. Beispielsweise kann dieses interagierende Element als ein ferromagnetisches Stanzteil oder Biegeteil ausgebildet sein. Der Hallsensor kann beispielsweise aus einem stromdurchflossenen Halbleiterelement gebildet sein, welches optional von einem angrenzenden ortsfesten Permanentmagneten ständig magnetisiert ist.
Insbesondere kann das stromdurchflossene Halbleiterelement durch ein Magnetfeld von einem hinter dem stromdurchflossenen Halbleiterelement fest eingebauten Permanentmagneten ständig magnetisch vorgespannt sein.

Wenn nun der Ringmagnet mit dem eine Außenverzahnung aufweisenden Zahnrad aus ferromagnetischem Material gebildet ist und in dieses Magnetfeld eindringt, wird dessen Feldstärke beeinflusst, wodurch eine Änderung der Spannung im Halbleiterelement ermittelt werden und aus dieser eine Position, insbesondere eine Sitzposition, bestimmt werden kann.

Alternativ kann der Hallsensor nur aus einem stromdurchflossenen Halbleiterelement gebildet sein.

In einem zweiten Ausführungsbeispiel kann das interagierende Element als ein Polring ausgebildet sein, der mehrpolig am Umfang magnetisiert ausgebildet ist. Beispielsweise kann ein solcher, als Polring ausgebildeter Ringmagnet mit auf dem Umfang abwechselnden Nordpolen und Südpolen versehen sein. Der Hallsensor kann in diesem zweiten Ausführungsbeispiel aus einem stromdurchflossenen Halbleiterelement gebildet sein. Ein solcher Hallsensor ist als ein bipolarer Hallsensor ausgebildet.

Die Aufgabe wird erfindungsgemäß zudem gelöst durch einen Fahrzeugsitz mit den Merkmalen des Anspruchs 10.

Zusammenfassend und mit anderen Worten ausgedrückt ist durch die Erfindung ein Sitz bereitgestellt, der während einer Sitzpositionsverstellung beispielsweise auf vier Rädern mit jeweils zwei Rädern auf einer der Unterschienen rollt. Dabei besteht ein Zusammenhang zwischen Drehwinkel des jeweiligen Rades und dem zugehörigen Bogenabschnitt des Rollradius und dem zurückgelegten Weg, insbesondere Sitzpositionsverstellweg, welcher der Bogenlänge entspricht. Dabei können vier Räder zu einer Überstimmung führen, weshalb nicht gewährleistet werden kann, dass auch jedes Rad im Kontakt mit der Unterschiene steht, so dass der direkte Zusammenhang zwischen Drehwinkel und zurückgelegtem Weg verloren geht. Der Erfindung liegt daher Idee zugrunde, eines der Räder direkt mit einem Hall-Element eines Hallsensors mit zugehörigen Einrichtungen für eine Magnetfelderzeugung auszustatten. Damit der zurückgelegte Weg, insbesondere indirekt über den Drehwinkel des Rades, genau bestimmt werden kann, muss dieses Rad immer im Kontakt mit der Schiene, insbesondere der Unterschiene, stehen. Hierfür kann dieses als Permanentkontaktrad ausgebildete Rad mit einer Kontaktierungsschicht, insbesondere eine Gummierung, versehen werden. Alternativ kann auch ein anderer Ausgleichsmechanismus vorgesehen sein, um den permanenten Schienenkontakt sicherzustellen.

## Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:

Fig. 1:    in schematischer Darstellung einen Fahrzeugsitz mit einer Längsverstelleinrichtung,

Fig. 2:    eine perspektivische Ansicht einer Längsverstelleinrichtung mit zwei zueinander parallel angeordneten Schienenpaaren, die jeweils aus einer Unterschiene und einer zu der Unterschiene verstellbaren Oberschiene und einer Anzahl von Rädern zum Abrollen auf der jeweiligen Unterschiene bestehen,

Fig. 3:    eine Seitenansicht einer der Schienenpaare mit zwei Rädern, die auf der Unterschiene abrollen,

Fig. 4:    einen vergrößerten Ausschnitt eines der Schienenpaare im Bereich eines als Kontaktrad ausgebildeten Rades in perspektivischer Darstellung,

Fig. 5:    das Kontaktrad gemäß Figur 4 in Seitenansicht,

Fig. 6:    das Kontaktrad gemäß Figur 4 in Seitenansicht mit einem ersten Ausführungsbeispiel für ein interagierendes Element, das direkt auf dem Kontaktrad angeordnet ist, und

Fig. 7:    das Kontaktrad gemäß Figur 4 in Seitenansicht mit einem zweiten Ausführungsbeispiel für ein interagierendes Element, das direkt auf dem Kontaktrad angeordnet ist.

Einander entsprechende Teile sind in allen Figuren mit den gleichen Bezugszeichen versehen.

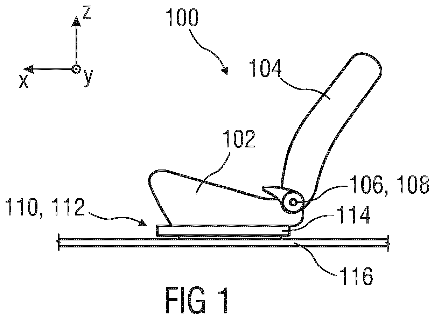

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten, beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

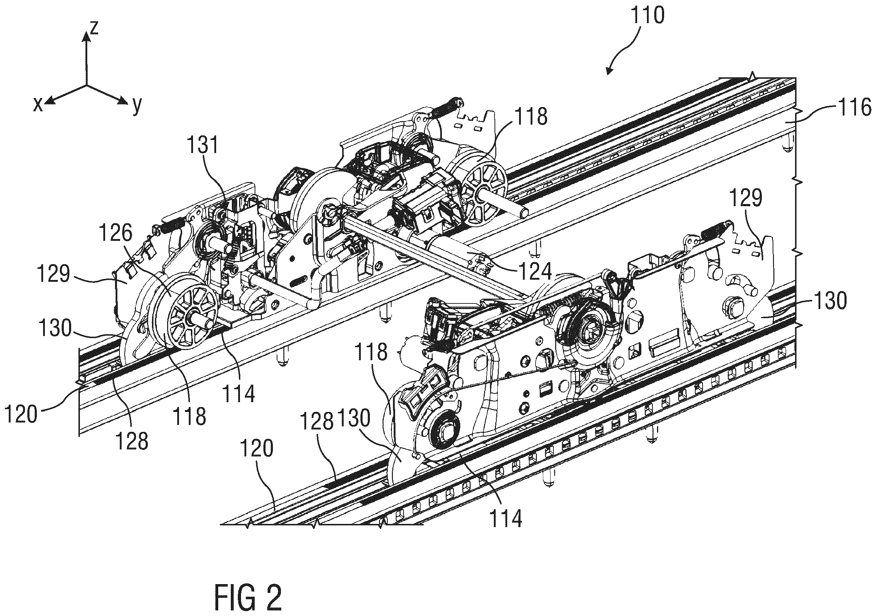

Figur 2 zeigt eine perspektivische Ansicht der Längsverstelleinrichtung 110 mit zwei zueinander parallel angeordneten Schienenpaaren, die jeweils aus einer Unterschiene 116 und einer zu der Unterschiene 116 verstellbaren Oberschiene 114 und einer Anzahl von Rädern 118 zum Abrollen auf der jeweiligen Unterschiene 116 gebildet sind. Die Unterschiene 116 umfasst eine ebene Kontaktfläche 120 (auch Abrollfläche genannt), die dafür vorgesehen ist, dass die Räder 118 abrollen.

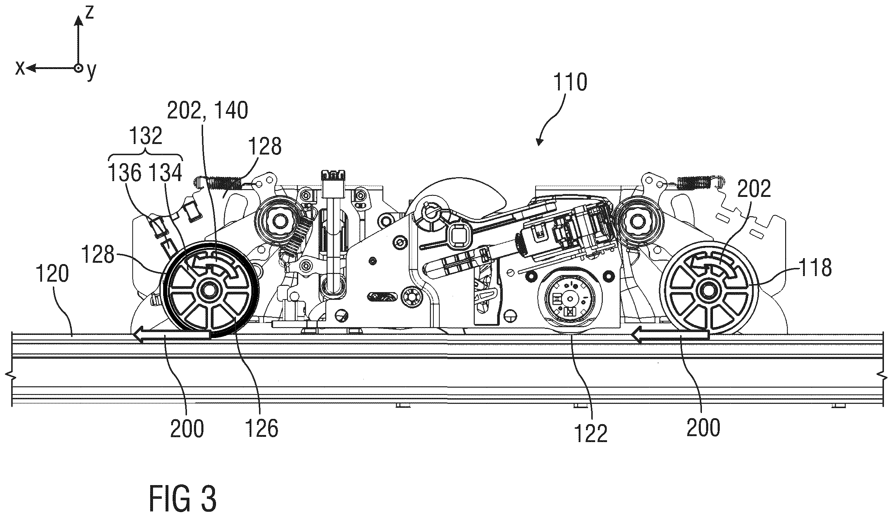

Die Längsverstelleinrichtung 110 umfasst zusätzlich ein Antriebsrad 122 (dargestellt in Figur 3, auch Reibrad genannt), durch welches die Oberschiene 114 und damit der Fahrzeugsitz 100 in der Längsrichtung x verstellt werden kann. Dazu kann das Antriebsrad 122 mit einer Antriebseinrichtung 124, zum Beispiel einem Elektromotor, gekoppelt sein.

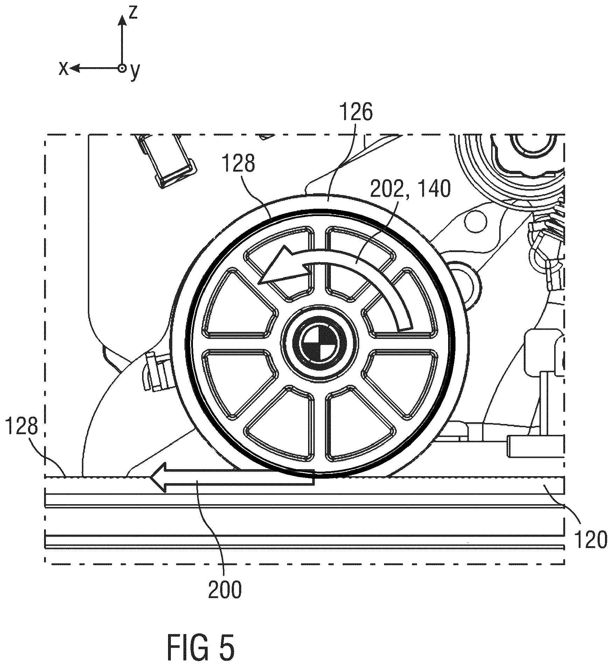

Darüber hinaus kann eines der Räder 118 als ein Kontaktrad 126 (dargestellt in Figur 3 oder zum Beispiel das vordere, linke Rad 118 in Figur 2) ausgebildet sein, das permanent mit der Kontaktfläche 120 in Kontakt steht. Hierzu kann entweder das Kontaktrad 126 (dargestellt in Figur 3) oder die Kontaktfläche 120 (dargestellt in Figur 2) oder können beide, das Kontaktrad 126 und die Kontaktfläche 120 (dargestellt in Figur 5), mit einer Kontaktierungsschicht 128 versehen sein.

Die Kontaktierungsschicht 128 ist insbesondere reibungserhöhend ausgebildet. Beispielsweise kann die Kontaktierungsschicht 128 eine Gummierung, eine Klebeschicht oder dergleichen umfassen oder als eine solche ausgebildet sein.

Auf die Kontaktfläche 120 der Unterschiene 116 kann beispielsweise ein in der Längsrichtung x verlaufendes Klebeband aus Kunststoff oder Gummi aufgeklebt sein. Das Kontaktrad 126 läuft auf der Kontaktfläche 120 und damit auf einer reibungserhöhenden Fläche, wodurch ein besserer Haftreibungskoeffizient, insbesondere ein permanenter Kontakt zwischen Kontaktrad 126 und Kontaktfläche 120, erzielt wird.

Mit anderen Worten: Das Kontaktrad 126 und/oder die Kontaktfläche 120 ist beziehungsweise sind eingerichtet, permanent miteinander in Kontakt zu stehen.

Das Sitzteil 102 ist über eine Sitzhalterung 129 lösbar an der jeweiligen Oberschiene 114 (auch Schlitten oder Gleiter genannt) befestigt. Die Oberschiene 114 ist innerhalb der Unterschiene 116 bewegbar gelagert. Zur lösbaren Befestigung des Sitzteils 102 an der Oberschiene 114 kann die Sitzhalterung 129 je Schienenpaar zwei Befestigungsklauen 130 umfassen.

Der Fahrzeugsitz 100 ist mittels der Befestigungsklauen 130 einfach einbaubar oder ausbaubar. Zusätzlich kann der Fahrzeugsitz 100 ein Easy Mount-Module 131 und die Antriebseinrichtung 124 sowie eine Schienenentriegelung (nicht näher dargestellt) umfassen.

Ein solcher Fahrzeugsitz 100 kann auf den beiden Sitzschienenpaaren, insbesondere den jeweiligen Unterschienen 116, elektromotorisch in seiner relativen Position im Fahrzeug verstellt und bewegt werden. Da die Unterschiene 116 wesentlich länger als die Oberschiene 114 ausgebildet ist, ermöglicht die Längsverstelleinrichtung 110 sehr lange Verstellwege in Längsrichtung x.

Für weitere, übliche Sicherheitssysteme im Fahrzeuginneren, zum Beispiel Airbags, Sitzgurtbefestigungen oder dergleichen, und/oder zur Prüfung von Sitzpositionen für oder während einer Fahrt, wird eine genaue Sitzposition des Fahrzeugsitzes 100 im Fahrzeug benötigt. Beispielsweise sind bestimmte Einstellbereiche und damit Sitzpositionen für einen belegten Fahrzeugsitz 100 während der Fahrt nicht zulässig.

Hierzu sieht die Längsverstelleinrichtung 110 eine Positionserkennung vor, die in diese Längsverstelleinrichtung 110 zumindest teilweise integriert ist.

Die Erfindung geht hinsichtlich einer Positionserkennung von der Überlegung aus, dass der Fahrzeugsitz 100 während einer Sitzpositionsverstellung auf den vier Rädern 118, insbesondere mit jeweils zwei Rädern 118 auf einer der Unterschienen 116, rollt. Infolgedessen besteht ein Zusammenhang zwischen einem zurückgelegten Drehwinkel 140 (auch rotation angle genannt) des Rades 118 und dem zugehörigen Bogenabschnitt des Rollradius des Rades 118 und dem zurückgelegten Verstellweg (auch linear motion genannt), welcher der Bogenlänge entspricht.

Die Idee besteht nun darin, dass eines der Räder 118 zur Positionserkennung verwendet wird, wobei ein zurückgelegter Verstellweg des Fahrzeugsitzes 100 indirekt über einen entsprechenden Drehwinkel 140 dieses Rades 118 genau bestimmt werden kann. Hierzu muss dieses Rad 118 als ein Kontaktrad 126 ausgebildet sein, das mittels der zuvor beschriebenen Kontaktierungsschicht 128 am Kontaktrad 126 (dargestellt in Figur 3) und/oder auf der Kontaktfläche 120 der Unterschiene 116 (dargestellt in Figur 2) immer im Kontakt mit der Kontaktfläche 120 der Unterschiene 116 steht und verbleibt.

Anstelle der Kontaktierungsschicht 128 kann auch ein anderer Ausgleichsmechanismus, insbesondere ein Stellmechanismus, ein Federmechanismus oder dergleichen, vorgesehen sein, um den permanenten Schienenkontakt des Kontaktrades 126 mit der Kontaktfläche 128 sicherzustellen.

Figur 3 zeigt eine Seitenansicht einer der Schienenpaare mit zwei Rädern 118, die auf der Unterschiene 116 abrollen.

Das vordere Rad 118 ist als Kontaktrad 126 ausgebildet und umfasst als Kontaktierungsschicht 128 zum Beispiel eine Gummierung oder eine Kunststoffschicht oder eine reiberhöhende Schicht.

Sowohl das Kontaktrad 126 als auch die anderen Räder 118 rollen gemäß Pfeil 202 bei einer linearen Sitzlängsverstellung gemäß Pfeil 200 auf der Kontaktfläche 120 ab.

Das Kontaktrad 126 weist eine Positionserkennungseinrichtung 132 auf.

Dadurch, dass die Positionserkennungseinrichtung 132 direkt an dem Kontaktrad 126, das permanent mit der Kontaktfläche 120 in Kontakt steht, angeordnet ist und/oder mit diesem Kontaktrad 126 in Wechselwirkung steht, kann die momentane Position des Fahrzeugsitzes 100 genau, insbesondere über den gesamten Verstellweg hinweg positionsgenau, bestimmt werden.

Beispielsweise kann die Positionserkennungseinrichtung 132 als eine kontaktlose Sensoreinrichtung ausgebildet sein. Insbesondere kann die Positionserkennungseinrichtung 132 einen Hallsensor 134 und ein interagierendes Element 136 umfassen.

Der Hallsensor 134 kann beispielsweise ortsfest an der Sitzhalterung 129 im Bereich des Kontaktrades 126 angeordnet und befestigt sein. Alternativ kann der Hallsensor 134 an der Oberschiene 114 im Bereich des Kontaktrades 126 angeordnet und befestigt sein (nicht näher dargestellt).

Das Kontaktrad 126 kann beispielsweise mit dem interagierenden Element 136 versehen sein.

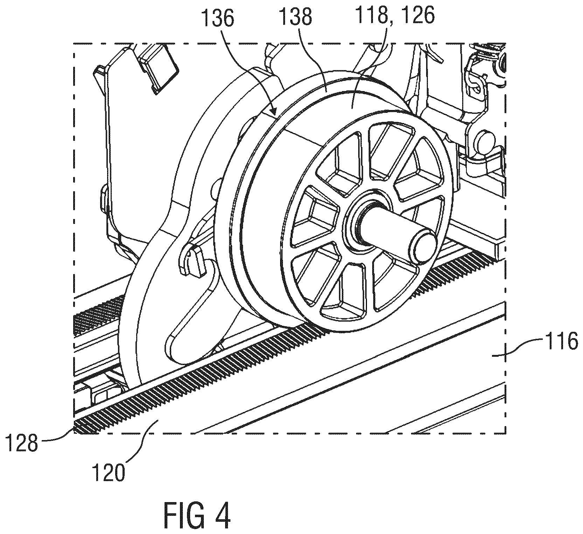

Figur 4 zeigt einen vergrößerten Ausschnitt eines der Schienenpaare im Bereich eines als Kontaktrad 126 ausgebildeten Rades 118 in perspektivischer Darstellung. Die Kontaktfläche 120 der Unterschiene 116 ist mit der Kontaktierungsschicht 128 in Form beispielsweise einer Profilierung versehen. In einem seitlichen Radflansch 138 kann das interagierende Element 136 integriert sein.

Figur 5 zeigt das Kontaktrad 126 gemäß Figur 4 in Seitenansicht und mit einer Gummierung als Kontaktierungsschicht 128, die mit der Kontaktierungsschicht 128 der Kontaktfläche 120 beim Abrollen gemäß Pfeil 202 im permanenten Eingriff steht. Der Pfeil 202 repräsentiert den bei der Sitzlängsverstellung gemäß Pfeil 200 zurückgelegten Drehwinkel 140 des Kontaktrades 126.

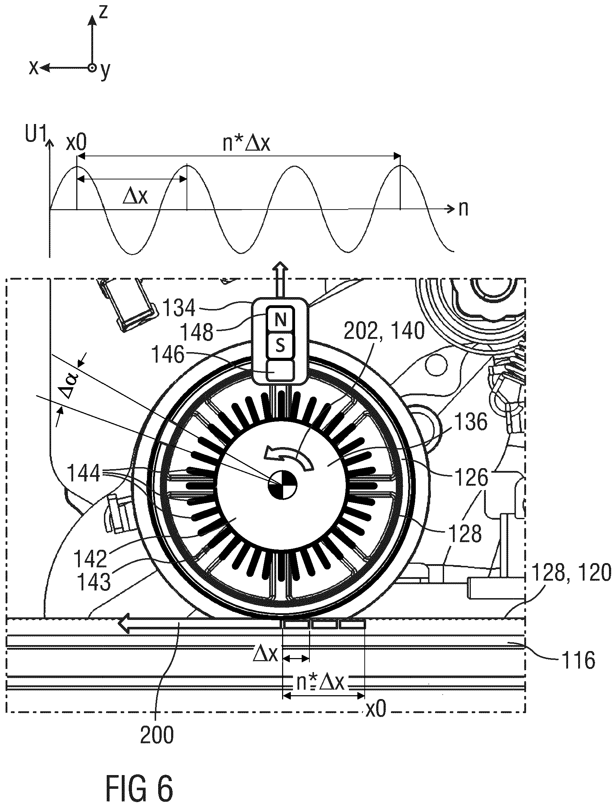

Figur 6 zeigt das Kontaktrad 126 gemäß Figur 4 in Seitenansicht mit einem ersten Ausführungsbeispiel für das interagierende Element 136, das direkt auf dem im permanenten Kontakt mit der Kontaktfläche 120 der Unterschiene 116 stehenden Kontaktrad 126 angeordnet oder in dieses Kontaktrad 126 integriert ist.

Das erste Ausführungsbeispiel des interagierenden Elements 136 ist beispielsweise als ein Zahnrad 142 mit einer Außenverzahnung 143 mit einer Anzahl von Zähnen 144 ausgebildet.

Beispielsweise kann dieses interagierende Element 136 als ein ferromagnetisches Stanzteil oder Biegeteil ausgebildet sein.

Der Hallsensor 134 kann beispielsweise aus einem stromdurchflossenen Halbleiterelement 146 gebildet sein, welches von einem angrenzenden ortsfesten Permanentmagneten 148 ständig magnetisiert ist. Dabei wird das stromdurchflossene Halbleiterelement 146 durch ein Magnetfeld von dem hinter dem stromdurchflossenen Halbleiterelement 146 fest eingebauten Permanentmagneten 148 ständig magnetisch vorgespannt.

Wenn nun das interagierende Element 136 mit dem Zahnrad 142 und der Außenverzahnung 143 aus einem ferromagnetischen Material gebildet ist und in dieses Magnetfeld des Hallsensors 134 eindringt, wird die Feldstärke dieses Magnetfeldes beeinflusst. Eine daraus resultierende Änderung der Spannung im Halbleiterelement 146 kann mittels einer Sensorelektronik des Hallsensors 134 ermittelt werden.

Anhand der ermittelten Spannungsänderung, insbesondere einer Sinus-Spannung U, kann die Sensorelektronik wiederum die momentane Sitzposition bestimmen.

Die Sinus-Spannung kann von der Sensorelektronik und/oder einer internen Sitzelektronik, zum Beispiel einem Sitzsteuergerät mit einer Signalverarbeitung (= CPU), in ein Rechtecksignal umgewandelt und verstärkt werden.

Über den direkten Zusammenhang zwischen Winkelabstand $\Delta\alpha$ der Zähne 144 (auch Zahnabstand genannt) und zugehörigem Drehwinkel 140 (auch Bogenabschnitt des Rollradius des Kontaktrades 126 genannt) ist die Berechnung des zurückgelegten Verstellweges und damit des Gesamtverstellweges möglich gemäß:

$$\text{Gesamtverstellweg} = n * \Delta x \qquad\qquad [1]$$

mit n = Anzahl der am Hallsensor 134 "vorbeifahrenden" Zähne 144 des Zahnrades 142 und $\Delta x$ = zurückgelegter Weg = ein während einer Drehung des Kontaktrades 126 von einer Ausgangsposition x0 zurückgelegter Weg.

Dargestellt ist der Zusammenhang zwischen Winkelabstand $\Delta\alpha$ und dem zurückgelegten Weg $\Delta x$. Wenn zum Beispiel drei Zähne 144 am Hallsensor 134 vorbei rotiert werden (= 3*$\Delta\alpha$), ergeben sich drei Sinusschwingungen, die dem zurückgelegten Weg 3*$\Delta x$ entsprechen.

Die Auflösung kann hierbei so fein gewählt werden, dass die Grenzen zwischen den Sitzpositionsbereichen mit der hier akzeptierten Toleranz erkannt werden. Es ist auch denkbar, dass bei hoher Auflösung der Positionsermittlung die Signale bei einer Optimierung der Verriegelungssequenz helfen können. Dieser Fahrzeugsitz 100 hat, von der Abtriebsseite her betrachtet, keine selbsthemmende Kopplung während der Verstellung via Reibradantrieb. Es muss eine Verriegelungsposition erreicht werden, um den Fahrzeugsitz 100 wieder sicher zu verriegeln. Ein so eingesetzter Hallsensor 134 mit hoher Auflösung kann sicherstellen, dass die Verriegelung in der Nähe vor einer bekannten Verriegelungsposition veranlasst wird. Es kann so sicher vermieden werden, dass eine Oberschiene 114 verriegelt ist, während die Oberschiene 114 des anderen Schienenpaares (auch andere Seite genannt) die zugehörige Verriegelungsposition knapp überfahren hat. Dies könnte zu Verspannungen des Fahrzeugsitzes 100 durch Weiterbewegung der einen Seite zur nächsten Verriegelungsposition aber letztlich zu einer nicht optimalen Verriegelungssequenz führen, insofern, als dass zur Gewährleistung der Verriegelung auch der Oberschiene 114 des anderen Schienenpaares eine Richtungsumkehr des zweiten Antriebs erfolgen muss, um zur rückwärtig richtigen Verriegelungsposition zurückzukehren.

Die Auflösung kann mit der Anzahl n der Zähne 144 und der Inkremente steigen.

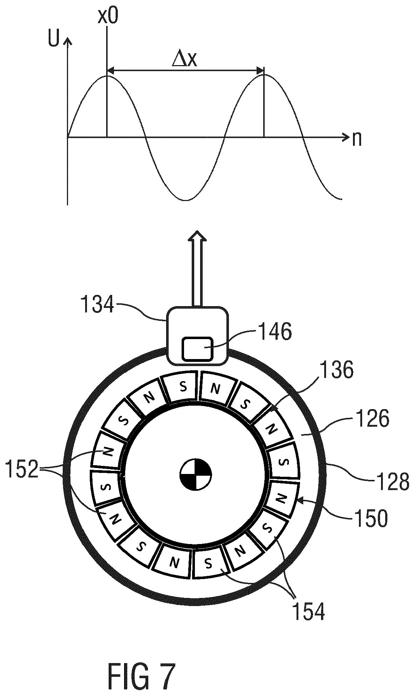

Figur 7 zeigt das Kontaktrad 126 gemäß Figur 4 in Seitenansicht mit einem zweiten Ausführungsbeispiel für das interagierende Element 136, das direkt auf dem Kontaktrad 126 angeordnet ist.

Bei diesem Ausführungsbeispiel umfasst der Hallsensor 134 nur ein stromdurchflossenes Halbleiterelement 146 (auch Hall-Element genannt). Ein solcher Hallsensor 134 ist als ein bipolarer Hallsensor ausgebildet. Am Kontaktrad 126 ist als interagierendes Element 136 ein Polring 150 vorgesehen, der mehrpolig am Umfang magnetisiert ausgebildet ist.

Beispielsweise kann der Polring 150 mit auf dem Umfang abwechselnden Nordpolmagneten 152 und Südpolmagneten 154 versehen sein. Mit anderen Worten: Es wechseln sich über den Umfang des Polrings 150 Nordpolmagneten 152 und Südpolmagneten 154 ab. Das stromdurchflossene Halbleiterelement 146 erfährt durch die Polwechsel des Polrings 150 ständig wechselnde Feldstärken. Daraus resultierend ändert sich die Spannung im Halbleiterelement 146 entsprechend periodisch. Die daraus resultierende Sinus-Spannung U wird analog zum ersten Ausführungsbeispiel nach Figur 6 von der Sensorelektronik und/oder der Sitzelektronik in ein Rechtecksignal umgewandelt und verstärkt. Über die Zuordnung von Winkelabstand $\Delta\alpha$ der Polwechsel zum Drehwinkel 140 (Bogenabschnitt des Kontaktrades 126) ist die Berechnung des zurückgelegten Gesamtverstellweges gemäß Formel [1] möglich:

Über den direkten Zusammenhang zwischen Winkelabstand $\Delta\alpha$ der Polwechsel und zugehörigem Drehwinkel 140 (auch Bogenabschnitt des Rollradius des Kontaktrades 126 genannt) ist die Berechnung des zurückgelegten Verstellweges und damit des Gesamtverstellweges möglich gemäß Formel [1]:

$$\text{Gesamtverstellweg} = n * \Delta x \qquad\qquad [1]$$

mit n = Anzahl der am Hallsensor 134 "vorbeifahrenden" Polmagnete (= Nordpolmagnete 152 und Südpolmagnete 154) und $\Delta x$ = zurückgelegter Weg = ein während einer Drehung des Kontaktrades 126 von einer Ausgangsposition x0 zurückgelegter Weg.

Auch hier steigt die Auflösung mit der Anzahl n der Polwechsel (= Inkremente).

**Bezugszeichenliste**

| | |
|---|---|
| 100 | Fahrzeugsitz |
| 102 | Sitzteil |
| 104 | Rückenlehne |
| 106 | Beschlag |
| 108 | Drehachse |
| 110 | Längsverstelleinrichtung |
| 112 | Schienenanordnung |
| 114 | Erstes Schienenelement (Oberschiene) |
| 116 | Zweites Schienenelement (Unterschiene) |
| 118 | Rad |
| 120 | Kontaktfläche |
| 122 | Antriebsrad |
| 124 | Antriebseinrichtung |
| 126 | Kontaktrad |
| 128 | Kontaktierungsschicht |
| 129 | Sitzhalterung |
| 130 | Befestigungsklaue |
| 131 | Easy-Mount-Modul |
| 132 | Positionserkennungseinrichtung |
| 134 | Hallsensor |
| 136 | interagierendes Element |
| 138 | Radflansch |
| 140 | Drehwinkel |
| 142 | Zahnrad |
| 143 | Außenverzahnung |
| 144 | Zähne |
| 146 | stromdurchflossenes Halbleiterelement |
| 148 | Permanentmagnet |
| 150 | Polring |
| 152 | Nordpolmagnet |
| 154 | Südpolmagnet |
| | |
| 200 | Pfeil |
| 202 | Pfeil |
| | |
| n | Anzahl |
| U | Sinus-Spannung |
| $\Delta\alpha$ | Winkelabstand |
| $\Delta x$ | zurückgelegter Weg |
| x0 | Ausgangsposition |
| | |
| x | Längsrichtung |
| y | Querrichtung |
| z | Vertikalrichtung |

**Patentansprüche**

1. Längsverstelleinrichtung (110) für einen Fahrzeugsitz (100), umfassend zumindest eine Schienenanordnung (112) mit einer festen Unterschiene (116) und einer zur Unterschiene (116) verstellbaren Oberschiene (114) sowie eine Anzahl von Rädern (118), die eingerichtet sind, auf einer den Rädern (118) zugewandten Kontaktfläche (120) der Unterschiene (116) abzurollen und die Oberschiene (114) relativ zu der Unterschiene (116) zu verstellen, wobei mindestens eines der Räder (118) als ein Kontaktrad (126) ausgebildet ist und dieses Kontaktrad (126) und/oder die Kontaktfläche (120) eingerichtet sind beziehungsweise ist, permanent miteinander in Kontakt zu stehen, und wobei dieses Kontaktrad (126) eine Positionserkennungseinrichtung (132) aufweist.

2. Längsverstelleinrichtung (110) nach Anspruch 1, wobei das Kontaktrad (126) und/oder die Kontaktfläche (120) mit einer Kontaktierungsschicht (128) versehen sind beziehungsweise ist.

3. Längsverstelleinrichtung (110) nach Anspruch 1 oder 2,
   wobei mindestens ein Ausgleichsmechanismus vorgesehen ist, der eingerichtet ist, dass das Kontaktrad (126) und die Kontaktfläche (120) permanent in Kontakt stehen.

4. Längsverstelleinrichtung (110) nach einem der vorhergehenden Ansprüche, wobei die Positionserkennungseinrichtung (132) einen Hallsensor (134) umfasst.

5. Längsverstelleinrichtung (110) nach Anspruch 4,
   wobei der Hallsensor (134) ortsfest an der Oberschiene (114) und/oder einer Sitzhalterung (129) im Bereich des Kontaktrades (126) angeordnet ist und das Kontaktrad (126) mit einem interagierenden Element (136) versehen ist.

6. Längsverstelleinrichtung (110) nach Anspruch 5,
   wobei das interagierende Element (136) als ein Zahnrad (142) mit einer Anzahl (n) von Zähnen (144) ausgebildet ist.

7. Längsverstelleinrichtung (110) nach Anspruch 5 oder 6,
   wobei das interagierende Element (136) als ein ferromagnetisches Stanzteil oder Biegeteil ausgebildet ist.

8. Längsverstelleinrichtung (110) nach einem der Ansprüche 4 bis 7,
   wobei der Hallsensor (134) ein stromdurchflossenes Halbleiterelement (146) umfasst, welches optional von einem angrenzenden ortsfesten Permanentmagneten (148) ständig magnetisiert ist.

9. Längsverstelleinrichtung (110) nach Anspruch 5,
   wobei das interagierende Element (136) als ein Polring (150) ausgebildet ist, der mehrpolig am Umfang magnetisiert ausgebildet ist.

10. Fahrzeugsitz (100) mit einer Längsverstelleinrichtung (110) nach einem der vorhergehenden Ansprüche.

FIG 1

FIG 2

FIG 3

FIG 4

FIG 5

FIG 6

FIG 7

**EP 4 559 741 A1**

EUROPÄISCHER RECHERCHENBERICHT

Nummer der Anmeldung

EP 23 21 2354

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 114817 A1 (FAURECIA SIEGES DAUTOMOBILE [FR]) 10. Dezember 2020 (2020-12-10) | 1-4,8,10 | INV. B60N2/02 B60N2/07 |
| A | * Abbildungen 2,3 * ----- | 5-7,9 | |
| A | DE 10 2020 202953 A1 (LEAR CORP [US]) 10. September 2020 (2020-09-10) * Absatz [0033]; Abbildungen 2,3D * ----- | 1 | |

RECHERCHIERTE SACHGEBIETE (IPC)

B60N

Der vorliegende Recherchenbericht wurde für alle Patentansprüche erstellt

| Recherchenort | Abschlußdatum der Recherche | Prüfer |
|---|---|---|
| München | 19. April 2024 | Pétiaud, Aurélien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes Dokument

EPO FORM 1503 03.82 (P04C03)

EP 4 559 741 A1

**ANHANG ZUM EUROPÄISCHEN RECHERCHENBERICHT
ÜBER DIE EUROPÄISCHE PATENTANMELDUNG NR.**     EP 23 21 2354

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2024

| Im Recherchenbericht angeführtes Patentdokument | Datum der Veröffentlichung | Mitglied(er) der Patentfamilie | Datum der Veröffentlichung |
|---|---|---|---|
| DE 102020114817 A1 | 10-12-2020 | DE 102020114817 A1<br>FR 3096938 A1 | 10-12-2020<br>11-12-2020 |
| DE 102020202953 A1 | 10-09-2020 | CN 111660885 A<br>DE 102020202953 A1 | 15-09-2020<br>10-09-2020 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1227950 B1